# EUROPÄISCHE PATENTANMELDUNG

(11) **EP 3 764 313 A1**
(43) Veröffentlichungstag der Anmeldung: **13.01.2021**
(21) Anmeldenummer: 20177250.6
(22) Anmeldetag: 28.05.2020
(51) Int. Cl.: G06Q 50/30, B60S 5/00, G08B 25/10

(54) **VERFAHREN ZUM BEREITSTELLEN VON SCHADENSINFORMATIONEN EINES KRAFTFAHRZEUGS AN EINE EXTERNE INFORMATIONSSTELLE, SOWIE KRAFTFAHRZEUG UND FAHRZEUGPANNENNOTRUFSYSTEM**

(30) Priorität: 08.07.2019 DE 102019210014
(71) Anmelder: VOLKSWAGEN AG, 38440 Wolfsburg (DE)
(72) Erfinder: Canpolat, Yigiterkut, 58456 Witten (DE); Ströher, Thorsten, 35649 Bischhoffen (Oberweidbach) (DE); Mütze, Klaus, 44388 Dortmund (DE)

(57) **Zusammenfassung**

Die Erfindung betrifft ein Verfahren zum Bereitstellen von Schadensinformationen eines Kraftfahrzeugs (5) an eine externe Informationsstelle (6), bei welchem
- in einem Schadensfall des Kraftfahrzeugs (5) ein Pannennotruf des Kraftfahrzeugs (5) aktiviert wird und eine kommunikationstechnische Verbindung (7) zu der externen Informationsstelle (6) aufgebaut wird,
- eine kommunikationstechnische Verbindung (7') eines tragbaren Kommunikationsendgeräts (4) eines Nutzers (8) des Kraftfahrzeugs (5) mit einem Kommunikationsmodul (3) des Kraftfahrzeugs (5) und/oder direkt mit der Informationsstelle (3) aufgebaut wird,
- mit dem tragbaren Kommunikationsendgerät (4) zumindest ein Bild und/oder zumindest eine Audiosequenz erzeugt wird, welches beziehungsweise welche eine Schadensinformation des Kraftfahrzeugs (5) beinhaltet, und
- Übersenden des zumindest einen Bilds und/oder der Audiosequenz zumindest an die externe Informationsstelle (6).

## Beschreibung

Die Erfindung betrifft ein Verfahren zum Bereitstellen von Schadensinformationen eines Kraftfahrzeugs an eine externe Informationsstelle, bei welchem in einem Schadensfall des Kraftfahrzeugs ein Pannennotruf des Kraftfahrzeugs aktiviert wird und eine kommunikationstechnische Verbindung zu der externen Informationsstelle aufgebaut wird. Des Weiteren betrifft die Erfindung ein Fahrzeugpannennotrufsystem mit einer Auswerteeinheit. Ebenso betrifft die Erfindung ein Kraftfahrzeug.

Die DE 10 2014 221 607 A1 offenbart ein Verfahren zur Diagnose von Störgeräuschen im Fahrzeug, wobei das Fahrzeug mindestens eine Mikrofonsignalbearbeitung aufweist, die zum Arbeiten mit zwei verschiedenen Audiosignalen konfigurierbar ist. Ein erster Audiosignalfilter zur Übertragung menschlicher Stimmen ist angepasst und ein zweiter Audiosignalfilter ist zum Erkennen von Störgeräuschen im Fahrzeug. In einem ersten Modus wird das zumindest eine Mikrofon und die Signalbearbeitung unter Verwendung des ersten Audiosignalfilters betrieben. Mithilfe des Mikrofons und der Signalbearbeitung werden die im ersten Modus erhaltenen Aufnahmen aufgezeichnet und/oder übertragen. In einem zweiten Modus wird eine Aufforderung empfangen, wobei die Aufforderung eine Eingabe eines Insassen des Fahrzeugs aufweist oder von einer entfernten Stelle, insbesondere einem Server, empfangen wird. Im zweiten Modus wird das mindestens eine Mikrofon und die Signalbearbeitung unter Verwendung des zweiten Audiosignals bearbeitet.

Die EP 0 982 697 B1 offenbart ein Verfahren zur Bearbeitung eines von einem Fahrzeug an eine Pannennotrufdienstzentrale oder Service-Zentrale ausgesendeten Pannennotruf, wobei von der Pannennotrufdienstzentrale für die Art der Panne bedeutende Fahrzeugzustandsdaten dem Fahrzeug nach Eingang des Notrufes durch eine Anfragenachricht angefordert werden und von einem Endgerät im Fahrzeug die Fahrzeugzustandsdaten zurück übertragen werden.

Die DE 20 2015 006 555 U1 offenbart ein System zur Absetzung eines Notrufes. Notrufe werden nicht herkömmlich durch Telefon oder Telefax empfangen, sondern durch SMS und/oder über internetbasierende Kurznachrichtendienste wie WhatsApp und andere Dienste mit der Möglichkeit zur Übertragung von Text-, Standard-, Bild-, Video- und Sprachdaten zu empfangen und zu senden.

Die CN 10 130 37 61 betrifft ein Verfahren zum Verwenden eines Mobiltelefons zum Aufnehmen von Bildern oder Videos in Echtzeit bei gleichzeitiger Einbettung der Aufnahme-Forensik-Informationen in Bilder oder Videos und zum Hochladen der Bilder und Videos mit Aufnahme-Forensik-Informationen auf eine Server-Bilddatenbank in Echtzeit zur Abwicklung von Kraftfahrzeug-Versicherungsansprüchen.

Dabei ergibt sich ein Nachteil, dass bei einem Pannennotruf nur Fahrzeugdaten als elektrische Signale von Steuergeräten an eine Werkstatt oder an einen Call-Center-Agenten übermittelt werden und gegebenenfalls mit diesem Agenten nur ein Audiogespräch initiiert wird.

Aufgabe der vorliegenden Erfindung ist es, ein Verfahren, ein Fahrzeugpannennotrufsystem und ein Kraftfahrzeug bereitzustellen, mit welchem ein Pannen- und/oder Reparaturfall eines Kraftfahrzeugs schnell effizienter ausgewertet werden kann.

Diese Aufgabe wird durch ein Verfahren, ein Fahrzeugpannennotrufsystem und ein Kraftfahrzeug gemäß den unabhängigen Patentansprüchen gelöst. Sinnvolle Weiterbildungen ergeben sich aus den Unteransprüchen.

Ein Aspekt der Erfindung betrifft ein Verfahren zum Bereitstellen von Schadensinformationen eines Kraftfahrzeugs an eine externe Informationsstelle, bei welchem in einem Schadensfall des Kraftfahrzeugs ein Pannennotruf des Kraftfahrzeugs aktiviert wird. Eine kommunikationstechnische Verbindung wird von dem Kraftfahrzeug zu der externen Informationsstelle aufgebaut. Es wird eine kommunikationstechnische Verbindung eines tragbaren Kommunikationsendgeräts eines Nutzers des Kraftfahrzeugs mit einem Kommunikationsmodul des Kraftfahrzeugs und/oder direkt mit der Informationsstelle aufgebaut. Insbesondere erfolgt dies automatisch, wenn eine kommunikationstechnische Verbindung zwischen dem Kraftfahrzeug und der externen Informationsstelle aufgebaut wird. Das automatische Aufbauen kann gleichzeitig oder zeitversetzt zu dem Aufbau der kommunikationstechnischen Verbindung zwischen dem Kraftfahrzeug und dem externen Informationsstelle erfolgen. Mit dem tragbaren Kommunikationsendgerät wird zumindest ein Bild und/oder zumindest eine Audiosequenz erzeugt, welche eine Schadensinformation des Kraftfahrzeugs beinhaltet. Das zumindest eine Bild und/oder die Audiosequenz wird zumindest an die externe Informationsstelle übersandt, insbesondere über die aufgebaute kommunikationstechnische Verbindung zwischen dem Kommunikationsendgerät und der externen Informationsstelle oder dem Kommunikationsmodul. Durch Erzeugung des zumindest einen Bildes und/oder der zumindest einer Audiosequenz können insbesondere Schäden am Kraftfahrzeug visuell und/oder akustisch unverzüglich aufgenommen und dargestellt werden. Es können mehrere Einzelbilder oder ein Video aufgenommen werden. Beispielsweise kann mit dem tragbaren Kommunikationsendgerät sofort ein Live-Video-Stream mit der externen Informationsstelle durchgeführt werden, sodass bei einem Schadensfall des Kraftfahrzeugs die auftretenden Schäden des Kraftfahrzeugs der zumindest einen externen Informationsstelle bereitgestellt und vorteilhaft dargestellt werden können. Dadurch kann insbesondere bei einem aktivierten Pannennotruf des Kraftfahrzeugs insbesondere dem Nutzer eine sofortige Hilfe und/oder Hilfsmaßnahmen anhand der übertragenen Bilder und Audiosequenzen bereitgestellt werden. Vorteilhafterweise kann durch die vorgeschlagene Erfindung ein Reparatur-, Pannen- und/oder Unfallservice aufgewertet und umfänglicherer einem Nutzer des Kraftfahrzeugs dargestellt und angeboten werden.

Bei einem Pannennotruf kann es sich insbesondere um einen abgesetzten Notruf bei einer Fahrzeugpanne und/oder bei einer Fahrzeugbeschädigung handeln. Der Pannennnotruf kann durch Betätigung eines Pannennnotrufbetätigungselements durch einen Nutzer des Kraftfahrzeugs aktiviert werden oder durch ein Fahrzeugsystem des Kraftfahrzeugs bei einem auftretenden Schadensfall des Kraftfahrzeugs automatisch aktiviert werden.

Bei der kommunikationstechnischen Verbindung zu der externen Informationsstelle kann es sich insbesondere um eine drahtlose Kommunikation über beispielsweise Bluetooth, WLAN, 4G, LTE oder UMTS handeln. Insbesondere wird die kommunikationstechnische Verbindung durch Aktivierung des Pannennnotrufs automatisch mit der externen Informationsstelle aufgebaut. Es wäre auch denkbar, dass mehrere kommunikationstechnische Verbindungen zu unterschiedlichen externen Informationsstellen gleichzeitig aufgebaut werden. Bei dem erfolgreichen Aufbau der kommunikationstechnischen Verbindung wird insbesondere automatisch eine kommunikationstechnische Verbindung des tragbaren Kommunikationsendgeräts des Nutzers des Kraftfahrzeugs mit dem Kommunikationsmodul des Kraftfahrzeugs und/oder direkt mit der Informationsstelle aufgebaut.

Bei dem tragbaren Kommunikationsendgerät des Nutzers handelt es sich insbesondere um ein Smartphone oder um ein Tablet. Das Kommunikationsmodul kann entweder eine separate Kommunikationseinheit im Fahrzeug sein oder Teil des Infotainmentsystem des Kraftfahrzeugs sein.

Insbesondere kann der Nutzer mithilfe der Kamera und des Lautsprechers des tragbaren Kommunikationsendgeräts das Bild und/oder die zumindest eine Audiosequenz aufnehmen und erzeugen. Mithilfe des tragbaren Kommunikationsendgeräts können beispielsweise Karosserieschäden des Kraftfahrzeugs, optische Beschädigungen am Fahrzeuginnen- und/oder -außenbereich des Kraftfahrzeugs aufgenommen werden. Mit der Audiosequenz können beispielsweise Störgeräusche des Keilriemens und/oder Getriebes des Fahrzeugs aufgezeichnet werden und an die externe Informationsstelle übertragen werden. Durch die erzeugten Bilder und/oder Audiosequenzen kann insbesondere ein Schaden im Schadensfall des Kraftfahrzeugs besser beschrieben und dokumentiert werden. Dadurch kann die zumindest eine externe Informationsstelle den Schaden des Kraftfahrzeugs besser analysieren.

Bei dem Kraftfahrzeug handelt es sich insbesondere um ein elektrisch betreibbares Fahrzeug, oder um ein Hybridfahrzeug oder um ein Kraftfahrzeug nur mit einem Verbrennungsmotor. Ebenso ist es denkbar, dass es sich bei dem Kraftfahrzeug um ein teilautonom oder vollautonom betreibbares Fahrzeug handelt.

In einer vorteilhaften Ausgestaltung der Erfindung ist vorgesehen, dass zumindest eine Bild- und/oder Audiosequenz durch den Nutzer manuell und/oder in Abhängigkeit eines Entscheidungskriteriums automatisch an die externe Informationsstelle übersendet wird. Dadurch kann erreicht werden, dass die erzeugten Bild- und/oder Audiosequenzen der Informationsstelle auch kontinuierlich übersendet werden. Beispielsweise kann bei einem Schadensfall einer hohen Priorität eine sofortige automatische Übersendung der Informationen durchgeführt werden, damit eine schnellstmögliche Unterstützung beziehungsweise Hilfe im Schadensfall des Kraftfahrzeugs insbesondere dem Nutzer bereitgestellt werden kann. Eine automatische Übersendung bedeutet, dass der Nutzer das Versenden nicht erst noch durch einen zusätzlichen Aktivierungsvorgang freigeben muss. Sobald die kommunikationstechnische Verbindung aufgebaut ist und das Aufnehmen von zumindest einem Bild erfolgt, wird das zumindest eine Bild automatisch übertragen. Beispielsweise kann bei einem Schadensfall einer niedrigen Priorität der Nutzer manuell entscheiden, ob oder wann die Bilder und/oder die Audiosequenzen der externen Informationsstelle übersendet werden. Insbesondere kann ein fahrzeugsystemabhängiges Entscheidungskriterium die Bild- und/oder Audiosequenzen der externen Informationsstelle automatisch übersenden. Die Entscheidungskriterien können insbesondere vordefiniert beziehungsweise vorgegeben werden, wobei in einer Prioritätsliste die möglichen Schadensfälle kategorisiert worden sind. Je nach Art des Schadensfalls kann das System mithilfe des Entscheidungskriteriums entscheiden, ab welcher Priorität eine sofortige und automatische Übertragung der Bild- und/oder der Audiosequenzen an die externe Informationsstelle vonnöten ist.

In einer weiteren vorteilhaften Ausgestaltung der Erfindung ist vorgesehen, dass das zumindest eine übersendete Bild oder die Audiosequenz von der externen Informationsstelle analysiert und aufbereitet wird, und abhängig von dem analysierten und aufbereiteten Bild und/oder der Audiosequenz eine Schadensdiagnose durch die externe Informationsstelle durchgeführt wird. Mithilfe der kommunikationstechnischen Verbindung werden die Bilder und/oder die Audiosequenzen an die externe Informationsstelle manuell und/oder automatisch übertragen. Nach Eingang der Bild- und/oder Audiosequenzen an eine Empfangseinheit der externen Informationsstelle werden die Bild- und/oder Audiosequenzen mithilfe einer Verarbeitungseinheit analysiert und entsprechend aufbereitet. Insbesondere kann mit der Verarbeitungseinheit der externen Informationsstelle in Abhängigkeit der übersendeten, analysierten und aufbereiteten Bild- und/oder Audiosequenzen die entsprechende Schadensdiagnose zu dem aktuellen Schadensfall des Kraftfahrzeugs durchgeführt beziehungsweise erzeugt und/oder generiert werden. Bei der Schadensdiagnose handelt es sich insbesondere um einen Reparaturdiagnoseprozess und/oder um einen Unfallmanagementprozess. Insbesondere können mit der Schadensdiagnose Reparaturen und/oder Unterstützungen für den auftretenden Schadensfall des Kraftfahrzeugs dem Nutzer bereitgestellt werden. Beispielsweise kann mit der Schadensdiagnose eine Vorabdiagnose durchgeführt werden. Somit kann der mögliche zeitliche und finanzielle Aufwand für die Behebung des Schadensfalls des Kraftfahrzeugs abgeschätzt und dem Nutzer dargestellt werden kann. Mithilfe der Schadensdiagnose kann insbesondere ein möglicher Reparaturprozess des Kraftfahrzeugs beschleunigt und verbessert werden.

Vorzugsweise ist vorgesehen, dass abhängig von der durchgeführten Schadensdiagnose eine Reparaturmaßnahme und/oder eine Vorgehensweise bereitgestellt wird, und die bereitgestellte Reparaturmaßnahme und/oder die Vorgehensweise an das Kommunikationsmodul des Kraftfahrzeugs und/oder an das tragbare Kommunikationsendgerät des Nutzers übermittelt wird. Durch die Übermittlung der Reparaturmaßnahmen und/oder der Vorgehensweise kann insbesondere dem Nutzer des Kraftfahrzeugs eine sofortige Hilfe und/oder Unterstützung im Schadensfall des Kraftfahrzeugs angeboten werden. Dadurch kann beispielsweise der Nutzer des Kraftfahrzeugs eine Sofortmaßnahme zum Entgegenwirken des Schadens des Kraftfahrzeugs einleiten. Ebenso können dadurch gewisse Reparaturen durch den Nutzer im Schadensfall durchgeführt werden. Über die kommunikationstechnische Verbindung kann insbesondere die entsprechende Reparaturmaßnahme und/oder Vorgehensweise direkt an das tragbare Kommunikationsendgerät des Nutzers übermittelt werden oder an das Kommunikationsmodul des Kraftfahrzeugs. Beispielsweise können die Reparaturmaßnahmen und/oder Vorgehensweisen am Infotainmentsystem des Kraftfahrzeugs dargestellt und ausgegeben werden. Beispielsweise können die Reparaturmaßnahmen und/oder Vorgehensweisen als Videodatei oder Audiodatei oder Bilddatei an das Kommunikationsmodul oder an das tragbare Kommunikationsendgerät übersendet werden.

In einer weiteren vorteilhaften Ausgestaltung der Erfindung ist vorgesehen, dass das zumindest eine Bild und/oder die Audiosequenz und/oder die Schadensdiagnose und/oder die Reparaturmaßnahmen und/oder Vorgehensweisen in einer externen Datenbank gespeichert werden, und bei einem zukünftigen Schadensfall des Kraftfahrzeugs von der Informationsstelle und/oder dem Nutzer abgerufen werden. Durch das Abspeichern der Bilder und/oder der Audiosequenz und/oder der Schadensdiagnose und/oder der Reparaturmaßnahmen und/oder der Vorgehensweisen in der externen Datenbank können bei zukünftig auftretenden Schadensfällen des Kraftfahrzeugs bessere und schnellere Maßnahmen ergriffen werden und insbesondere dem Nutzer eine schnellere Hilfe angeboten werden. Insbesondere können all diese Daten bei der Erstellung von Reports und/oder Historien berücksichtigt werden, sodass abhängig von den Schadensfällen und/oder des Kraftfahrzeugs spezielle Historien erzeugt werden können. Diese können insbesondere von der externen Informationsstelle bei der Erzeugung von Schadensdiagnosen und Reparaturmaßnahmen und Vorgehensweisen berücksichtigt und verwendet werden. Dadurch kann eine umfänglichere und verbesserte Unterstützung und/oder Hilfe für einen Nutzer im Falle eines Schadensfalls des Kraftfahrzeugs bereitgestellt werden.

Vorzugsweise ist vorgesehen, dass das Übersenden des zumindest einen Bilds und/oder der Audiosequenz an die externe Informationsstelle in Echtzeit durchgeführt wird. Dadurch können insbesondere der externen Informationsstelle aktuelle Schadensinformationen über den aktuell aufgetretenen Schadensfall des Kraftfahrzeugs bereitgestellt werden. Insbesondere kann mithilfe des tragbaren Kommunikationsendgeräts eine echtzeitfähige Live-Video-Übertragung des aktuellen Schadensfalls des Kraftfahrzeugs an die externe Informationsstelle durchgeführt werden. Insbesondere kann mithilfe der kommunikationstechnischen Verbindung eine echtzeitfähige Bilddatei und/oder Videodatei und/oder Audiodatei an die zumindest eine externe Informationsstelle übersendet werden. Dadurch kann die externe Informationsstelle eine verbesserte Analyse und Aufbereitung der übersendeten Bild- und/oder Audiosequenzen durchführen und insbesondere eine verbesserte Schadensdiagnose dem Kraftfahrzeug und/oder dem Nutzer des Kraftfahrzeugs und/oder der externen Informationsstelle bereitstellen. Beispielsweise können die Bilder und/oder Audiosequenzen mithilfe von echtzeitfähigen Anwendungen des tragbaren Kommunikationsendgeräts übersendet werden. Beispielsweise können mit Smartphone-Anwendungen wie beispielsweise Skype oder WhatsApp oder eines anderen Videokommunikationskanals die Schadensinformationen der externen Informationsstelle in Echtzeit übertragen und bereitgestellt werden.

In einer vorteilhaften Ausgestaltung der Erfindung ist des Weiteren vorgesehen, dass mit dem tragbaren Kommunikationsendgerät des Nutzers eine bidirektionale Interaktion, insbesondere ein Videogespräch, zwischen dem Nutzer des Kraftfahrzeugs und einem Mitarbeiter der externen Informationsstelle durchgeführt wird, sodass zusätzlich zu dem zumindest einen Bild und/oder der Audiosequenz weitere Informationen dem Mitarbeiter der externen Informationsstelle bereitgestellt werden können. Durch die bereitgestellte Interaktion zwischen dem Nutzer und dem Mitarbeiter der Informationsstelle können aktuelle Schadensinformationen im Schadensfall des Kraftfahrzeugs insbesondere dem Mitarbeiter dargestellt werden. Dadurch kann der Mitarbeiter der Informationsstelle insbesondere den Schadensfall des Kraftfahrzeugs besser analysieren und einschätzen. Insbesondere kann dadurch eine verbesserte Schadensdiagnose des Schadensfalls des Kraftfahrzeugs durchgeführt werden und verbesserte und effizientere Reparaturmaßnahmen und/oder Vorgehensweisen dem Nutzer des Kraftfahrzeugs bereitgestellt werden. Insbesondere erfolgt die Interaktion über ein Videogespräch und/oder Audiogespräch zwischen dem Nutzer und dem Mitarbeiter der externen Informationsstelle. Beispielsweise kann mithilfe des tragbaren Kommunikationsendgeräts des Nutzers eine Live-Übertragung mit dem Mitarbeiter durchgeführt werden, sodass Schäden des Kraftfahrzeugs dem Mitarbeiter sofort aufgezeigt werden können.

Vorzugsweise ist vorgesehen, dass das zumindest eine erzeugte Bild und/oder die Audiosequenz mit dem Kommunikationsmodul des Kraftfahrzeugs und/oder mit dem tragbaren Kommunikationsendgerät an eine Servicewerkstatt und/oder an eine Versicherungsgesellschaft und/oder an einen Pannendienst als externe Informationsstelle übersandt wird. Dadurch können bei einem Schadensfall des Kraftfahrzeugs die Schadensinformationen umfänglicher genutzt werden, indem unterschiedliche externe Informationsstellen mit dem Bild und/oder den Audiosequenzen versorgt werden. Dadurch können vielfältigere Hilfs- und/oder Unterstützungsmaßnahmen dem Nutzer im Schadensfall bereitgestellt werden. Dadurch können beispielsweise Vorabdiagnosen erzeugt oder mögliche Reparaturprozesse nach dem Schadensfall vereinfacht und beschleunigt werden. Im Falle der Versicherungsgesellschaft kann anhand des Bildes und/oder der Audiosequenzen Schadensanalyse durchgeführt werden, sodass ein möglicher Versicherungsfall und/oder Reparaturfall schnellstmöglich bearbeitet werden kann.

Insbesondere ist vorgesehen, dass der Pannennotruf standardmäßig zur Verbindung mit einer Notrufstelle des Fahrzeugherstellers führt. Diese Notrufstelle kann eine autorisierte Werkstatt, insbesondere des Fahrzeugherstellers, oder ein Notrufagent des Fahrzeugherstellers sein. Es kann vorgesehen sein, zusätzlich zur dieser Standardverbindung eine zusätzliche kommunikationstechnische Verbindung zu einer weiteren Externen Informationsstelle aufgebaut werden kann. Dies kann durch den Nutzer selbst erfolgen. Es kann aber auch hier eine automatischer Verbindungsaufbau erfolgen. Beispielweise kann dies abhängig von einer nutzerindividuellen Vorkonfiguration, insbesondere des Kommunikationsendgeräts, und/oder abhängig von den Bildinformationen des aufgenommenen Bilds und/oder der Audiosequenz und/oder durch die Notrufstelle erfolgen. Die weitere externe Informationsstelle kann ein Versicherungsdienstleister, insbesondere derjenige, bei welchem das Kraftfahrzeug versichert ist, und/oder eine vom Fahrzeughersteller unabhängige Servicewerkstatt sein.

Bei einer Werkstatt als externe Informationsstelle können anhand der übersendeten Bild- und/oder Audiosequenzen die benötigten Maßnahmen für die bevorstehende Reparatur des Schadens des Kraftfahrzeugs vorab analysiert werden. Dadurch können unnötige Wartezeiten bei möglichen Ersatzteilbestellungen reduziert werden und insbesondere kann dem Nutzer schnellstmöglich ein Reparaturtermin vorgeschlagen und angeboten werden. Insbesondere können potentielle Ersatzteile sofort angeschafft werden.

Ein weiterer Aspekt der Erfindung betrifft ein Fahrzeugpannennotrufsystem mit einer Auswerteeinheit, einem Kommunikationsmodul und einem tragbaren Kommunikationsendgerät, wobei das Fahrzeugpannennotrufsystem zum Durchführen eines Verfahrens nach einem der soeben geschilderten Aspekte oder einer Weiterbildung davon ausgebildet ist. Insbesondere wird das Verfahren mit dem Fahrzeugpannennotrufsystem durchgeführt.

Ein weiterer Aspekt der Erfindung betrifft ein Kraftfahrzeug mit einem Fahrzeugpannennotrufsystem nach einem der vorher geschilderten Aspekte oder einer Weiterbildung daraus.

Zu der Erfindung gehören auch Weiterbildungen des erfindungsgemäßen Kraftfahrzeugs und des erfindungsgemäßen Fahrzeugpannennotrufsystem, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs und des erfindungsgemäßen Fahrzeugpannennotrufsystem hier nicht noch einmal beschrieben.

Die Erfindung umfasst auch die Kombinationen der Merkmale der beschriebenen Ausführungsformen.

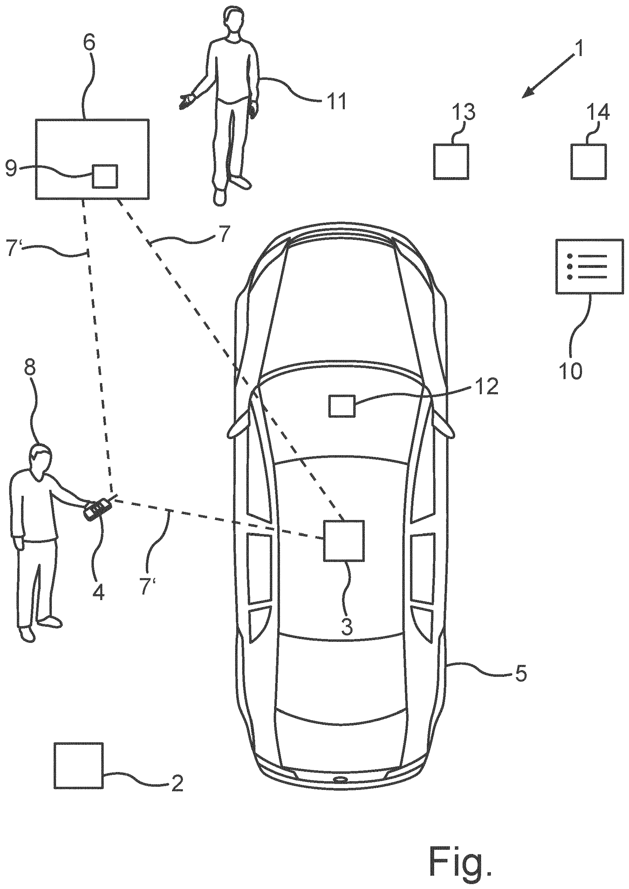

Im Folgenden ist ein Ausführungsbeispiel der Erfindung beschrieben. Hierzu zeigt die einzige Figur eine beispielhafte Darstellung eines Fahrzeugpannennotrufsystems zum Bereitstellen von Schadensinformationen eines Kraftfahrzeugs an eine externe Informationsstelle.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Fig. zeigt ein Fahrzeugpannennotrufsystem 1 mit einer Auswerteeinheit 2, einem Kommunikationsmodul 3 und einem tragbaren Kommunikationsendgerät 4. Mit dem Fahrzeugpannennotrufsystem 1 können insbesondere Schadensinformationen eines Kraftfahrzeugs 5 an eine externe Informationsstelle 6 bereitgestellt werden. Die Schadensinformationen werden insbesondere in einem Schadensfall des Kraftfahrzeugs 5 der externen Informationsstelle 6 bereitgestellt. In dem Schadensfall des Kraftfahrzeugs 5 wird insbesondere ein Pannennotruf des Kraftfahrzeugs 5 aktiviert, insbesondere durch den Nutzer oder automatisch, und dann automatisch eine kommunikationstechnische Verbindung 7 als vorgegebene beziehungsweise voreingestellte Standardverbindung zu der externen Informationsstelle 6 aufgebaut. Bei einer erfolgreich aufgebauten kommunikationstechnischen Verbindung 7 werden beispielsweise die Schadensinformationen automatisch an die externe Informationsstelle 6 übersendet. Insbesondere wird gleichzeitig oder zeitversetzt zum Aufbau der kommunikationstechnischen Verbindung 7 eine kommunikationstechnische Verbindung 7' zwischen dem Kommunikationsendgerät 4 eines Nutzers 8 des Kraftfahrzeugs 5 und der externen Informationsstelle direkt aufgebaut oder eine derartige kommunikationstechnische Verbindung 7' mit dem Kommunikationsmodul 3 aufgebaut.

Bei einer kommunikationstechnischen Verbindung 7, 7' handelt es sich insbesondere um eine drahtlose Verbindung, wie beispielsweise eine WLAN-, Bluetooth-, 3G-, 4G-Verbindung.

Mit dem tragbaren Kommunikationsendgerät 4 wird zumindest ein Bild und/oder zumindest eine Audiosequenz erzeugt, welches beziehungsweise welche eine Schadensinformation des Kraftfahrzeugs 5 beinhaltet. Dies wir durch den Nutzer 8 mit dem Kommunikationsendgerät 8 aufgenommen. Bei dem tragbaren Kommunikationsendgerät 4 handelt es sich beispielsweise um ein Smartphone oder um ein Tablet des Nutzers 8.

Die Bilder und/oder die Audiosequenzen werden mittels einer Kamera und/oder eines Lautsprechers des tragbaren Kommunikationsendgeräts 4 aufgenommen und erzeugt. Die erzeugten Bilder und/oder Audiosequenzen können beispielsweise mit dem tragbaren Kommunikationsendgerät 4 oder über das Kommunikationsmodul 3 an die zumindest eine externe Informationsstelle 6 übersendet werden. Insbesondere erfolgt dies automatisch, insbesondere in Echtzeit.

Das Kommunikationsmodul 3 kann beispielsweise als externe Einheit im Kraftfahrzeug 5 verbaut sein oder es kann als Kommunikationsmodul 3 ein Fahrzeugsystem wie beispielsweise ein Infotainmentsystem des Kraftfahrzeugs 5 verwendet werden.

Bei der externen Informationsstelle 6 handelt es sich beispielsweise um eine Servicewerkstatt und/oder um eine Versicherungsgesellschaft und/oder um einen Pannendienst. Insbesondere wird bei einem Pannennotruf eine entsprechende externe Informationsstelle über die kommunikationstechnische Verbindung 7 über den eintretenden Schadensfall des Kraftfahrzeugs 5 automatisch informiert.

Beispielsweise können mit dem tragbaren Kommunikationsendgerät 4 Bilder, Audiosequenzen, Videos, Geräusche, Bildfolgen oder Live-Übertragungen erzeugt und an die externe Informationsstelle 6 über die kommunikationstechnische Verbindung 7' oder über die kommunikationstechnische Verbindungen 7 und 7' über das Kommunikationsmodul 3 übertragen werden.

Beispielsweise kann mit der Auswerteeinheit 2 des Fahrzeugpannennotrufsystems 1 die Bilder und/oder zumindest eine Audiosequenz erzeugt und aufbereitet werden. Die Auswerteeinheit 2 kann insbesondere Teil der externen Informationsstelle 6 sein oder als externe Einheit fungieren.

Die erzeugten Bilder und/oder Audiosequenzen mithilfe des tragbaren Kommunikationsendgeräts 4 können durch den Nutzer 8 manuell und/oder in Abhängigkeit eines Entscheidungskriteriums automatisch an die externe Informationsstelle 6 übersendet werden. Die übersendeten Bild- und/oder Audiosequenzen können von der externen Informationsstelle 6 analysiert und aufbereitet werden. Insbesondere erfolgt die Analysierung und Aufbereitung der übersendeten Bild- und/oder Audiosequenzen durch eine Verarbeitungseinheit 9 der externen Informationsstelle 6. Die Verarbeitungseinheit 9 und/oder die Informationsstelle 6 können in Abhängigkeit von den analysierten und aufbereiteten Bild- und/oder Audiosequenzen eine Schadensdiagnose erzeugen und bereitstellen. Abhängig von der erzeugten Schadensdiagnose können Reparaturmaßnahmen und/oder Vorgehensweisen bereitgestellt werden, wobei die bereitgestellten Reparaturmaßnahmen und/oder Vorgehensweisen über die kommunikationstechnische Verbindung 7 an das Kommunikationsmodul 3 des Kraftfahrzeugs 5 und/oder an das tragbare Kommunikationsendgerät des Nutzers 8 übermittelt werden. Dadurch können dem Nutzer 8 Unterstützungsmaßnahmen und/oder Hilfsmaßnahmen im Falle des Schadensfalls des Kraftfahrzeugs 5 bereitgestellt werden. Beispielsweise können diese Reparaturmaßnahmen und/oder Vorgehensweisen ebenso externen Werkstätten oder Reparaturdiensten bereitgestellt werden. Dadurch können mögliche Reparaturen der Schäden des Kraftfahrzeugs 5 im Vorfeld aufbereitet und entsprechende Ersatzteile und Kapazitäten bereitgestellt werden.

Insbesondere können die erzeugten Bilder und/oder Audiosequenzen und/oder die Schadensdiagnose und/oder die Reparaturmaßnahme und/oder die Vorgehensweisen in einer externen Datenbank 10 gespeichert werden und bei einem zukünftigen Schadensfall des Kraftfahrzeugs 5 von der externen Informationsstelle 6 und/oder von dem Nutzer 8 abgerufen werden. Dadurch können die zukünftig auftretenden Schadensfälle des Kraftfahrzeugs 5 durch Berücksichtigung der vergangenen Schadensfälle beziehungsweise vergangenen Schadensinformationen des Kraftfahrzeugs 5 detaillierter und umfänglicher analysiert und aufbereitet werden.

Mithilfe des tragbaren Kommunikationsendgeräts 4 des Nutzers 8 und der kommunikationstechnischen Verbindung 7 können die erzeugten Bilder und/oder Audiosequenzen an die externe Informationsstelle 6 in Echtzeit übersendet werden. Dadurch können die aktuellen Schadensinformationen des aktuell auftretenden Schadensfalls des Kraftfahrzeugs 5 der externen Informationsstelle 6 sofort bereitgestellt werden. Beispielsweise können über eine echtzeitfähige Live-Übertragung mithilfe der Kamera des tragbaren Kommunikationsendgeräts 4 die Schäden am Kraftfahrzeug 5 der externen Informationsstelle 6 live dargestellt und übertragen werden. Dadurch können schnellstmöglich Hilfsmaßnahmen dem Nutzer 8 im Schadensfall bereitgestellt werden. Insbesondere kann mit dem tragbaren Kommunikationsendgerät 4 des Nutzers 8 eine bidirektionale Interaktion zwischen dem Nutzer 8 des Kraftfahrzeugs 5 und einem Mitarbeiter 11 der externen Informationsstelle 6 durchgeführt werden. Dadurch können der Informationsstelle 6 beziehungsweise der Mitarbeiter 11 der externen Informationsstelle 6 über die übersendeten Bild- und/oder Audiosequenzen zusätzliche Informationen über die durchgeführten Interaktionen zwischen dem Nutzer 8 und dem Mitarbeiter 11 bereitgestellt werden. Dadurch können bessere Sofortmaßnahmen und/oder Reparaturmaßnahmen und/oder Schadensdiagnosen des aktuellen Schadensfalls des Kraftfahrzeugs 5 durchgeführt werden.

Beispielsweise können die durchgeführten Interaktionen zwischen dem Nutzer 8 und dem Mitarbeiter 11 ebenfalls in der externen Datenbank 10 gespeichert werden und für spätere Reports oder Historien verwendet werden. Bei der externen Datenbank 10 handelt es sich insbesondere um einen externen Server oder um eine Cloud.

Insbesondere kann der Nutzer 8 über einen Notrufpannenknopf 12 den Pannenruf des Kraftfahrzeugs 5 im Schadensfall des Kraftfahrzeugs 5 aktivieren. Ebenso ist es denkbar, dass über eine Anwendungssoftware des tragbaren Kommunikationsendgeräts 4 ein Pannennotruf durch den Nutzer 8 aktiviert wird. Bei einem automatischen Aktivieren des Pannennotrufes erfolgt eine Aktivierung des Pannennotrufs über ein Fahrzeugführungssystem oder über ein Fahrzeugsystem des Kraftfahrzeugs 5.

Beispielsweise kann in einem Anwendungsbeispiel der vorgeschlagenen Erfindung der Schadensfall des Kraftfahrzeugs 5 eine Pannensituation während eines Fahrbetriebs des Kraftfahrzeugs 5 sein. Bei Feststellung der Pannensituation des Kraftfahrzeugs 5 durch den Nutzer 8 oder durch ein Fahrzeugführungssystem des Kraftfahrzeugs 5 kann entweder der Nutzer 8 über den Notrufpannenknopf 12 den Pannennotruf aktivieren oder das Fahrzeug 5 aktiviert diesen automatisch. Nach Aktivierung des Pannennotrufs wird die kommunikationstechnische Verbindung 7 mit dem Pannendienst als externe Informationsstelle 6 aufgebaut. Insbesondere nimmt der Mitarbeiter 11 des Pannendienstes den Pannennotruf entgegen. Beispielsweise kann der Nutzer 8 über das tragbare Kommunikationsendgerät 4 dem Mitarbeiter 11 Bilder und/oder Audiosequenzen über die aktuelle Pannensituation des Kraftfahrzeugs 5 darlegen. Beispielsweise können mithilfe einer Car-Net-App die Daten an den Pannendienst übermittelt werden.

Beispielsweise kann mithilfe einer echtzeitfähigen Live-Übertragung der aktuellen Pannensituation der Mitarbeiter 11 sich die aktuelle Pannenursache des Kraftfahrzeugs 5 anzeigen lassen. Dadurch können beispielsweise die Ursachen für die Panne besser eingeschätzt werden und entsprechende Reparaturmaßnahmen und/oder Vorgehensweisen erstellt beziehungsweise bereitgestellt werden. Ebenso kann der Mitarbeiter 11 der externen Informationsstelle 6 mithilfe der live übertragenen Pannensituation dem Nutzer 8 entsprechende Instruktionen darlegen und eventuell die Ursachen der Panne direkt vor Ort beseitigen zu können. Andernfalls kann der Mitarbeiter 11 mithilfe der durchgeführten Schadensdiagnose der Pannensituation einer Werkstatt beziehungsweise einer Vertragswerkstatt diese Informationen zukommen lassen, sodass schnellstmöglich eine Reparatur und/oder Hilfe für den Nutzer 8 des Kraftfahrzeugs 5 bereitgestellt werden kann.

Insbesondere können neben dem erzeugten Bild und/oder Audiosequenzen über das Kommunikationsmodul 3 Fahrzeugdaten und fahrzeugspezifische Informationen an die externe Informationsstelle 6 übersendet werden. Diese können zusätzlich zur Erstellung der Schadensdiagnose verwendet werden. Dadurch müssen die Fahrzeugdaten nicht bei einer Reparatur erst ausgelesen werden, sondern stehen der Informationsstelle 6 im Vorfeld bereits bereit. Dadurch kann eine Reparatur des Kraftfahrzeugs 5 schneller und effizienter durchgeführt werden.

In einem weiteren möglichen Anwendungsbeispiel können der externen Informationsstelle aufgetretene Schäden, insbesondere Sachschäden, am Kraftfahrzeug 5 als Schadensinformation der externen Informationsstelle 6 bereitgestellt werden. Nach Betätigung des Pannennotrufs des Kraftfahrzeugs 5 mithilfe des Notrufpannenknopfes 12 können die kommunikationstechnischen Verbindung 7, 7' mit einer Servicewerkstatt als externe Informationsstelle 6 aufgebaut werden, sodass ein Mitarbeiter 11 der Servicewerkstatt den Notruf entgegennehmen kann und sich einen Überblick über den auftretenden Sachschaden des Kraftfahrzeugs 5 darstellen lassen kann. Bei den Sachschäden kann es sich insbesondere um Karosserieschäden, optische Beschädigungen im Innen- und/oder Außenbereich des Kraftfahrzeugs 5 oder um Störgeräusche im Keilriemen oder im Getriebe handeln. Der Mitarbeiter 11 kann mithilfe der übersendeten Bild- und/oder Audiosequenzen den auftretenden Sachschaden genauestens analysieren und entsprechende Vorbereitungen und/oder Gegenmaßnahmen bereitstellen. Insbesondere können dadurch Reparaturtermine im Vorfeld festgelegt werden, und insbesondere benötigte Ersatzteile bereitgestellt werden. Beispielsweise kann der Mitarbeiter 11 der Servicewerkstatt eine Vorabdiagnose stellen, um den möglichen Zeitaufwand und/oder finanziellen Aufwand abschätzen zu können. Dadurch kann ein Reparaturprozess schneller durchgeführt werden. Insbesondere kann dadurch dem Nutzer 8 des Kraftfahrzeugs 5 schnellstmöglich Hilfe geleistet werden.

Beispielsweise kann die vorgeschlagene Erfindung ebenfalls als Unfall-Schaden-Management-System angewendet werden. Beispielsweise kann nach einem Unfall des Kraftfahrzeugs 5 mithilfe des Notrufpannenknopfes 12 die kommunikationstechnische Verbindung 7' zusätzlich auch mit einer Versicherungsgesellschaft 13 als zusätzliche externe Informationsstelle 6 und/oder einer, insbesondere vom Fahrzeughersteller unabhängigen, Werkstatt 14 als externe Informationsstelle 6 aufgebaut werden. Die Werkstatt kann auch ein Pannendienst, wie beispielsweise auch ein Abschleppservice, sein. Der Mitarbeiter 11 der Versicherungsgesellschaft kann den eingehenden Anruf annehmen und sich einen ersten Überblick mithilfe der übersendeten Bild- und/oder Audiosequenzen darstellen lassen. Die übermittelten Bild- und/oder Audiosequenzen und/oder fahrzeugspezifischen Informationen werden digitalisiert und dokumentiert und anschließend beispielsweise in der externen Datenbank 10 zwischengespeichert. Dadurch können die Schäden besser analysiert und ein nachfolgender Bericht beziehungsweise Unfallbereich erstellt werden. Dadurch können umfänglichere Dokumentationen und Reports über einen entstandenen Schaden, insbesondere Sachschaden, am Kraftfahrzeug 5 besser eingeschätzt, beurteilt und dokumentiert werden. Dadurch können die laufenden Prozesse nach einem Unfall vereinfacht und beschleunigt werden.

### Bezugszeichenliste

- 1: Fahrzeugpannennotrufsystem
- 2: Auswerteeinheit
- 3: Kommunikationsmodul
- 4: tragbares Kommunikationsendgerät
- 5: Kraftfahrzeug
- 6: Informationsstelle
- 7: kommunikationstechnische Verbindung
- 8: Nutzer
- 9: Verarbeitungseinheit
- 10: Datenbank
- 11: Mitarbeiter
- 12: Notrufpannenknopf
- 13: Versicherungsdienstleister
- 14: Werkstatt

## Patentansprüche

1. Verfahren zum Bereitstellen von Schadensinformationen eines Kraftfahrzeugs (5) an eine externe Informationsstelle (6), bei welchem
- in einem Schadensfall des Kraftfahrzeugs (5) ein Pannennotruf des Kraftfahrzeugs (5) aktiviert wird und eine kommunikationstechnische Verbindung (7) zu der externen Informationsstelle (6) aufgebaut wird,
- eine kommunikationstechnische Verbindung (7') eines tragbaren Kommunikationsendgeräts (4) eines Nutzers (8) des Kraftfahrzeugs (5) mit einem Kommunikationsmodul (3) des Kraftfahrzeugs (5) und/oder direkt mit der Informationsstelle (3) aufgebaut wird,
- mit dem tragbaren Kommunikationsendgerät (4) zumindest ein Bild und/oder zumindest eine Audiosequenz erzeugt wird, welches beziehungsweise welche eine Schadensinformation des Kraftfahrzeugs (5) beinhaltet, und
- Übersenden des zumindest einen Bilds und/oder der Audiosequenz zumindest an die externe Informationsstelle (6).

2. Verfahren nach Anspruch 1, wobei das zumindest eine Bild und/oder die Audiosequenz durch den Nutzer (8) manuell und/oder in Abhängigkeit eines Entscheidungskriteriums automatisch an die externe Informationsstelle (6) übersendet wird.

3. Verfahren nach Anspruch 1 oder 2, wobei das zumindest eine übersendete Bild und/oder Audiosequenz von der externen Informationsstelle (6) analysiert und aufbereitet wird, und abhängig von dem analysierten und aufbereiteten Bild und/oder der Audiosequenz eine Schadensdiagnose durch die externe Informationsstelle (6) durchgeführt wird.

4. Verfahren nach Anspruch 3, wobei abhängig von der durchgeführten Schadensdiagnose eine Reparaturmaßnahme und/oder eine Vorgehensweise bereitgestellt wird, und die bereitgestellte Reparaturmaßnahme und/oder die Vorgehensweise an das Kommunikationsmodul (3) des Kraftfahrzeugs (5) und/oder an das tragbare Kommunikationsendgerät (5) des Nutzers (8) übermittelt wird.

5. Verfahren nach Anspruche 3 und 4, wobei das zumindest eine Bild und/oder die Audiosequenz und/oder die Schadensdiagnose und/oder die Reparaturmaßnahmen und/oder Vorgehensweisen in einer externen Datenbank (10) gespeichert werden, und bei einem zukünftigen Schadensfall des Kraftfahrzeugs (5) von der externen Informationsstelle (6) und/oder von dem Nutzer (8) abgerufen werden.

6. Verfahren nach einem der vorhergehenden Ansprüche, wobei das Übersenden des zumindest einen Bilds und/oder der Audiosequenz an die externe Informationsstelle (6) in Echtzeit durchgeführt wird.

7. Verfahren nach einem der vorhergehenden Ansprüche, wobei mit dem tragbaren Kommunikationsendgerät (4) des Nutzers (8) eine bidirektionale Interaktion, insbesondere ein Videogespräch, zwischen dem Nutzer (8) des Kraftfahrzeugs (5) und einem Mitarbeiter (11) der externen Informationsstelle (6) durchgeführt wird, sodass zusätzlich zu dem zumindest einen übersendeten Bild und/oder der Audiosequenz weitere Informationen dem Mitarbeiter (11) der externen Informationsstelle (6) bereitgestellt werden.

8. Verfahren nach einem der vorhergehenden Ansprüche, wobei das zumindest eine erzeugte Bild und/oder die Audiosequenz mit dem Kommunikationsmodul (3) des Kraftfahrzeugs (5) und/oder mit dem tragbaren Kommunikationsendgerät (4) an eine Servicewerkstatt und/oder an eine Versicherungsgesellschaft und/oder an einen Pannendienst als externe Informationsstelle (6) übersandt wird.

9. Fahrzeugpannennotrufsystem (1) mit einer Auswerteeinheit (2), einem Kommunikationsmodul (3) und einem tragbaren Kommunikationsendgerät (4), wobei das Fahrzeugpannennotrufsystem (1) zum Durchführen eines Verfahrens nach einem der vorhergehenden Ansprüche ausgebildet ist.

10. Kraftfahrzeug (5) mit einem Fahrzeugpannennotrufsystem (1) nach Anspruch 9.
